# EUROPEAN PATENT APPLICATION

(11) **EP 4 290 621 A1**
(43) Date of publication of application: **13.12.2023**
(21) Application number: 22919472.5
(22) Date of filing: 14.01.2022
(51) Int. Cl.: H01M 4/62, H01M 4/13, H01M 10/0525

(54) **POSITIVE ELECTRODE PLATE AND SECONDARY BATTERY COMPRISING SAME**

(71) Applicant: Contemporary Amperex Technology Co., Limited, Ningde, Fujian 352100 (CN)
(72) Inventor: ZHUANG, Hengxu, Ningde, Fujian 352100 (CN); WU, Yanying, Ningde, Fujian 352100 (CN); WANG, Xinghui, Ningde, Fujian 352100 (CN)
(74) Representative: Frick, Robert
(86) International application number: PCT/CN2022/072084
(87) International publication number: WO 2023/133820

(57) **Abstract**

The present application relates to a positive electrode sheet, including: a positive electrode current collector; and a positive electrode film, disposed on at least one surface of the positive electrode current collector and including a first additive, where the first additive includes a structural unit made from acrylonitrile and a structural unit made from a monomer represented by formula I, 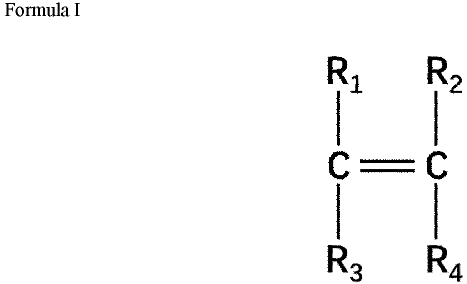 where R₁, R₂, R₃, and R₄ are each independently selected from hydrogen, an alkyl group with 1-8 carbon atoms or a saturated carboxylic acid group with 1-8 carbon atoms, and at least one of R₁, R₂, R₃, R₄ is selected from the saturated carboxylic acid group with 1-8 carbon atoms. The present application further provides a secondary battery, including the above positive electrode sheet. The secondary battery provided by the present application has good DCR and cycle performance.

## Description

### TECHNICAL field

The present application relates to the technical field of secondary batteries, and in particular, to a secondary battery including a specific positive electrode sheet. In addition, the present application also relates to a battery pack, a battery module, and a power consumption apparatus including the secondary battery.

### BACKGROUND

In recent years, secondary batteries are widely applied to energy storage power systems such as hydropower, firepower, wind power and solar power plants, as well as electric tools, electric bicycles, electric motorcycles, electric vehicles, military equipment, aerospace and other fields. As secondary batteries have been greatly developed, higher requirements have been put forward for their energy density, cycle performance, safety performance, or the like.

### SUMMARY

The present application is made in view of the foregoing problems. The objective is to provide a technical solution in which a secondary battery can have good direct current resistance (DCR) performance and cycle performance even if a strong alkaline substance is used in a positive electrode sheet.

In order to achieve the foregoing objective, in a first aspect of the present application, a positive electrode sheet is provided, including:
a positive electrode current collector; and
a positive electrode film, the positive electrode film disposed on at least one surface of the positive electrode current collector and including a first additive, where the first additive includes a structural unit made from acrylonitrile and a structural unit made from a monomer represented by formula I, 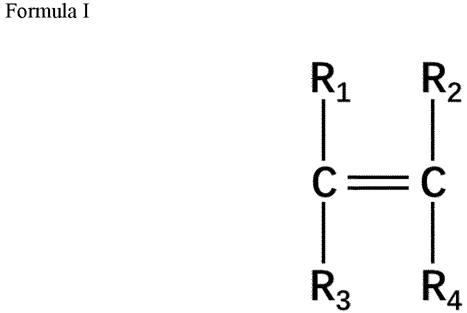
where R₁, R₂, R₃, and R₄ are each independently selected from hydrogen, an alkyl group with 1-8 carbon atoms or a saturated carboxylic acid group with 1-8 carbon atoms, and at least one of R₁, R₂, R₃, R₄ is selected from the saturated carboxylic acid group with 1-8 carbon atoms.

In any embodiment, in the monomer of formula I, a total number of carbon atoms is 3-10.

In any embodiment, a weight proportion of the structural unit made from the monomer represented by the formula I in the first additive is 60-85%, optionally, 65-75%.

In any embodiment, a weight-average molecular weight of the first additive is 500-100,000, optionally, 2,000-50,000, and more optionally, 5,000-20,000.

The weight-average molecular weight of the first additive is selected to be 500-100,000, which is conducive to the synthesis of the first additive, and can further improve the direct current resistance (DCR) and cycle performance of the positive electrode sheet of the battery. In addition, a high molecule with an excessively long molecular chain causes an increase in the DCR of the electrode sheet, which in turn leads to degradation of cycle performance of the battery, and therefore it is advantageous that the weight-average molecular weight of the first additive is less than 100,000.

In any embodiment, a weight proportion of the first additive in the positive electrode film is 0.01-2%, optionally, 0.02-1.5%, optionally, 0.05-1.2%, based on a total weight of the positive electrode film. If this proportion is less than 0.01%, a gelation phenomenon and stability problem of the positive electrode slurry cannot be improved; and if this proportion is greater than 2%, it results in that the secondary battery prepared by using the prepared positive electrode film has an increased DCR and degraded cycle performance.

In any embodiment, the positive electrode film includes a second additive that is a vinylidene fluoride modified polymer having a vinylidene fluoride main chain and a C₃-C₁₀ unsaturated carboxylic acid group grafted on the vinylidene fluoride main chain.

In any embodiment, a weight proportion of the C₃-C₁₀ unsaturated carboxylic acid group in the second additive is less than or equal to 1%, optionally, 0.5-1%.

In any embodiment, a weight-average molecular weight of the second additive is in a range of 800,000-1500,000. The weight-average molecular weight of the second additive is limited to the foregoing range, so that it may effectively function as a binder to prevent the positive electrode film from falling off the positive electrode current collector. In addition, the foregoing molecular weight range may also ensure good contact between the positive electrode film and the positive electrode current collector and can effectively reduce film resistance of the positive electrode sheet, thereby reducing the DCR of the secondary battery and improving the cycle performance of the secondary battery.

In any embodiment, a weight proportion of the second additive in the positive electrode film is less than or equal to 3.5%, optionally, less than or equal to 2.5%, based on a total weight of the positive electrode sheet. If the weight proportion is greater than 3.5%, brittleness of the electrode sheet degrades and the battery DCR increases.

In any embodiment, the positive electrode film includes a lithium-rich additive represented by formula II,

Formula II LiₓM_{y}Rₖ

where x>0, y≥0; k>0; x, y, k satisfy the following conditions: their values are such that the formula is electrically neutral;
M is selected from a transition metal, optionally, M is selected from one of Ni, Co, Fe,
R is selected from one of S, N, O, F;
optionally, the positive electrode film includes the lithium-rich additive selected from the following:

   LiNiO₂, Li₂NiO₂, LiCoO₄, Li₆CoO₄, Li₅FeO₄, Li₂S, Li₃N, Li₂O, Li₂O₂, and LiF.

During the first charge-discharge cycle of a lithium-ion battery, some active Li⁺ removed from the positive electrode participates in the formation of a SEI film on a surface of a negative electrode, and this part of Li⁺ cannot provide discharge capacity in the subsequent cycle, resulting in irreversible capacity loss. In some preferred embodiments of the present application, in order to compensate for the loss of this part of active Li⁺, a lithium-rich additive having formula II is selected to be added to the positive electrode sheet, which can effectively compensate for the loss of active Li⁺ due to the formation of the SEI film in the negative electrode of the battery, increasing the reversible capacity of the battery, thereby increasing mass energy density and volume energy density of the battery. In the case where the first additive and/or the second additive described in the present application are added, the energy density of the lithium-ion battery can be ensured to be improved by adding the lithium-rich additive, and processability of the slurry and the cycle performance of the lithium-ion battery can be ensured.

In any embodiment, a weight proportion of the lithium-rich additive in the positive electrode film is less than or equal to 15 wt%, optionally, less than or equal to 10 wt%. The lithium-rich additive within the foregoing proportion range can effectively compensate for the loss of active Li⁺ due to the formation of the SEI film in the negative electrode of the battery, further improving the energy density of the battery. If the lithium-rich additive exceeds the foregoing range, there is a safety risk to the battery cell. The weight proportion of the lithium-rich additive in the positive electrode film is limited to the foregoing range.

In a second aspect of the present application, a secondary battery is provided, including the positive electrode sheet in the first aspect of the present application. The secondary battery provided by the present application has direct current resistance performance and cycle performance.

In a third aspect of the present application, a battery module is provided, including the secondary battery in the second aspect of the present application.

In a fourth aspect of the present application, a battery pack is provided, including the battery module in the third aspect of the present application.

In a fifth aspect of the present application, a power consumption apparatus is provided, including at least one of the secondary battery in the second aspect of the present application, the battery module in the third aspect of the present application, or the battery pack in the fourth aspect of the present application.

The secondary battery, the battery module, the battery pack, and the power consumption apparatus in the present application include the positive electrode sheet described in the present application, and thus have better cycle performance.

### BRIEF DESCRIPTION OF THE DRAWINGS

FIG. 1 is a scanning electron microscope image of a positive electrode sheet obtained in Example 15 of the present application.
FIG. 2 is a bar graph of DCR data obtained in Examples 1, 7, 15 and Comparative Examples 1, 4.
FIG. 3 is a data analysis diagram of cycle performance data obtained in Examples 1, 7, 15 and Comparative Examples 1, 4.
FIG. 4 is a schematic diagram of a secondary battery according to an embodiment of the present application.
FIG. 5 is an exploded view of the secondary battery according to the embodiment of the present application shown in FIG. 4.
FIG. 6 is a schematic diagram of a battery module according to an embodiment of the present application.
FIG. 7 is a schematic diagram of a battery pack according to an embodiment of the present application.
FIG. 8 is an exploded view of the battery pack according to the embodiment of the present application shown in FIG. 7.
FIG. 9 is a schematic diagram of a power consumption apparatus in which a secondary battery is used as a power source according to an embodiment of the present application.

### DESCRIPTION OF REFERENCE SIGNS

1 battery pack; 2 upper box; 3 lower box; 4 battery module; 5 secondary battery; 51 housing; 52 electrode assembly; 53 top cover assembly

### DESCRIPTION OF EMBODIMENTS

Hereinafter, embodiments that specifically disclose a positive active material and its slurry preparation method, a negative active material and its preparation method, a positive electrode sheet, a negative electrode sheet, a secondary battery, a battery module, a battery pack, and a power consumption apparatus of the present application will be described in detail with reference to the accompanying drawings as appropriate. However, unnecessarily detailed descriptions may be omitted in some cases. For example, detailed descriptions of well-known matters and repeated descriptions of practically identical structures are omitted. This is done to avoid unnecessarily redundant descriptions for ease of understanding by persons skilled in the art. In addition, the drawings and the following description are provided for a full understanding of the present application by persons skilled in the art, and are not intended to limit the subject matter in the claims.

A "range" disclosed herein is defined in the form of a lower limit and an upper limit. A given range is defined by selecting a lower limit and an upper limit, and the selected lower limit and upper limit define a boundary of a particular range. The range defined in this manner may or may not include end values, and may be combined arbitrarily, that is, any lower limit may be combined with any upper limit to form a range. For example, if ranges of 60-120 and 80-110 are listed for a particular parameter, it is understood that ranges of 60-110 and 80-120 are also contemplated. In addition, if the minimum range values listed are 1 and 2, and the maximum range values listed are 3, 4 and 5, all the following ranges are contemplated: 1-3, 1-4, 1-5, 2-3, 2-4, and 2-5. In the present application, unless otherwise specified, a numerical range "a-b" represents an abbreviated representation of any combination of real numbers between a and b, where both a and b are real numbers. For example, a numerical range "0-5" means that all real numbers between "0-5" have been listed herein, and "0-5" is just an abbreviated representation of a combination of these numerical values. In addition, when a certain parameter is expressed as an integer ≥2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application may be combined with each other to form a new technical solution.

Unless otherwise specified, all technical features and optional technical features of the present application may be combined with each other to form a new technical solution.

Unless otherwise specified, all steps of the present application may be performed sequentially or randomly, but preferably, performed sequentially. For example, a method includes steps (a) and (b), which means that the method may include steps (a) and (b) performed sequentially or steps (b) and (a) performed sequentially. For example, the method mentioned may further include step (c), which means that step (c) may be added to the method in any order, for example, the method may include steps (a), (b) and (c), steps (a), (c) and (b), steps (c), (a) and (b), or the like.

Unless otherwise specified, "comprising" and "containing" mentioned in the present application are open-ended or closed-ended. For example, the "comprising" and "containing" may mean that other components that are not listed may further be comprised or contained, or only listed components may be comprised or contained.

In the present application, unless otherwise specified, the term "or" is inclusive. For example, the phrase "A or B" means "A, B or both A and B". More particularly, a condition "A or B" is satisfied by any one of the following: A is true (or present) and B is false (or not present); A is false (or not present) and B is true (or present); or both A and B are true (or present).

The inventor found in practical work that, when a strong alkaline positive active material is used, a gelation phenomenon tends to occur in the slurry during the preparation of the positive electrode slurry, so that the positive electrode sheet prepared is brittle and the resulting secondary battery has poor performance.

The inventor unexpectedly found that by using a specific additive, the gelation phenomenon of the slurry can be improved when the slurry is strong alkaline, and the problems of brittle positive electrode sheet and poor direct current resistance and cycle performance of the battery can be solved.

Therefore, in a first aspect of the present application, a positive electrode sheet is provided including a specific additive. The additive is particularly suitable for use in a strong alkaline slurry, for example, a strong alkaline slurry produced in the case where a lithium-rich additive is added and/or when a high-nickel positive active material is used. The foregoing high-nickel positive active material may be selected to be a positive active material with a nickel content ≥80%. The additive can improve processability of the strong alkaline slurry and the brittleness of the positive electrode sheet while ensuring the direct current resistance and cycle performance of the secondary battery prepared.

In a second aspect of the present application, a secondary battery is provided, including the positive electrode sheet in the first aspect of the present application. The secondary battery provided by the present application has good cycle performance.

In third aspect of the present application, a battery module is provided, including the secondary battery in the second aspect of the present application.

In fourth aspect of the present application, a battery pack is provided, including the battery module in the third aspect of the present application.

In fifth aspect of the present application, a power consumption apparatus is provided, including at least one of the secondary battery in the second aspect of the present application, the battery module in the third aspect of the present application, or the battery pack in the fourth aspect of the present application.

The secondary battery, the battery module, the battery pack, and the power consumption apparatus in the present application include the positive electrode sheet described in the present application, and thus have better cycle performance.

Hereinafter, a secondary battery, a battery module, a battery pack, and a power consumption apparatus of the present application will be described with reference to the accompanying drawings as appropriate.

### [Secondary Battery]

In a second aspect of the present application, a secondary battery is provided, including the positive electrode sheet in the first aspect of the present application.

A secondary battery, also known as a rechargeable battery or a storage battery, refers to a battery that can activate an active material by charging after the battery is discharged and be used continuously.

Typically, a secondary battery includes a positive electrode sheet, a negative electrode sheet, a separator, and an electrolytic solution. During charging and discharging of the battery, active ions (such as lithium ions) are embedded and removed back and forth between the positive electrode sheet and the positive electrode sheet. The separator is provided between the positive electrode sheet and the negative electrode sheet, and mainly plays the role of preventing a short circuit between positive and negative electrodes while allowing the active ions to pass. The electrolytic solution plays the role of conducting the active ions between the positive electrode sheet and the negative electrode sheet.

### [Positive Electrode Sheet]

In a first aspect of the present application, a positive electrode sheet is provided, including:
a positive electrode current collector; and
a positive electrode film, the positive electrode film disposed on at least one surface of the positive electrode current collector and including a first additive, where the first additive includes a structural unit made from acrylonitrile and a structural unit made from a monomer represented by formula I, 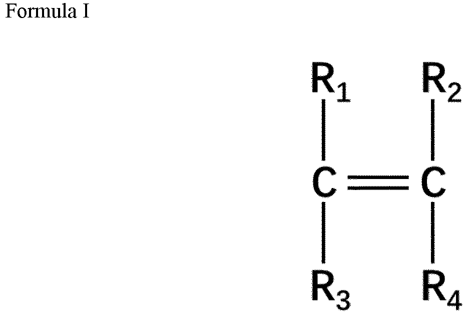
where R₁, R₂, R₃, and R₄ are each independently selected from hydrogen, an alkyl group with 1-8 carbon atoms or a saturated carboxylic acid group with 1-8 carbon atoms, and at least one of R₁, R₂, R₃, R₄ is selected from the saturated carboxylic acid group with 1-8 carbon atoms.

In the present application, the alkyl group with 1-8 carbon atoms may be a straight chain or branched chain alkyl group with 1-8 carbon atoms, which may be selected from, for example, methyl, ethyl, propyl, butyl, pentyl, hexyl, heptyl, octyl, isopropyl, isobutyl, tert-butyl, isopentyl, tert-pentyl, neopentyl, 2-methylpentyl, 3-methylpentyl, 2,2-dimethylbutyl, 2,3-dimethylbutyl, 2-methylhexyl, 3-methylhexyl, 2,2-dimethylpentyl, 3,3-dimethylpentyl, 2,3-dimethylpentyl, 2,4-dimethylpentyl, 3-ethylpentyl, 2,2,3-trimethylbutyl, 2-methylheptyl, 3-methylheptyl, 4-methylheptyl, 2,2-dimethylhexane, 3,3-dimethylhexane, 2,3-dimethylhexane, 2,4-dimethylhexane, 2,5-dimethylhexane, 3,4-dimethylhexane, 3-ethylhexane, 2,2,3-trimethylpentane, 2,2,4-trimethylpentane, 2,3,3-trimethylpentane, 2,3,4-trimethylpentane, 2-methyl-3-ethylpentane, 3-methyl-3-ethylpentane, and 2,2,3,3-tetramethylbutane.

In the present application, the saturated carboxylic acid group with 1-8 carbon atoms may be a monobasic saturated carboxylic acid group, a dibasic saturated carboxylic acid group or a polybasic saturated carboxylic acid group. As an example, the saturated carboxylic acid group with 1-8 carbon atoms may be a monobasic saturated carboxylic acid group, which may be selected from carboxylic acid groups such as formic acid, acetic acid, propionic acid, butyric acid, valeric acid, caproic acid, heptanoic acid, and octanoic acid.

In some optional embodiments, the monomer represented by formula I may be acrylic acid, methacrylic acid, butenedioic acid, and the like.

The first additive may be prepared by conventional technical means in the art, or by the following method:
(1) at a temperature of 25°C-45°C, a certain weight of acrylonitrile and a certain weight of the monomer of formula I are added to a solvent and fully stirred to make the two monomers evenly dispersed; and
(2) an initiator is added, then the reaction system is placed in a water bath at 40-80°C, left standing and reacting, and then vacuum-dried, to obtain the first additive.

In some optional embodiments, in the preparation of the first additive, the reaction system is placed in a water bath at 40-80°C and is left standing for 45-55 h.

In some optional embodiments, in the preparation of the first additive, the vacuum drying is performed for 20-30 h.

The first additive described in the present application may be used in the preparation of a positive electrode sheet of a secondary battery, and is particularly suitable for use in a strong alkaline slurry, for example, when a lithium-rich additive is added or when a positive active material with a nickel content ≥80% is used.

The first additive described in the present application is a solid with a melting point in a range of 30-80°C and a crystallinity in a range of 10-20%.

In some embodiments, in the monomer of formula I, a total number of carbon atoms is 3-10.

In the present application, the monomer of formula I of which the number of carbon atoms is less than or equal to 10 is selected, which is more conducive to the copolymerization with acrylonitrile into the first additive.

In some embodiments, a weight proportion of the structural unit made from the monomer represented by the formula I in the first additive is 60-85%, optionally, 65-75%.

By limiting the weight proportion of the structural unit made from the monomer represented by formula I in the first additive to the foregoing range, the first additive may be solid, thereby improving the manufacturability of the first additive used in the positive electrode slurry.

In some optional embodiments, the first additive only includes a structural unit made from acrylonitrile and a structural unit made from a monomer represented by formula I.

A method for determining the weight proportion of the structural unit made from the monomer of formula I in the first additive is as follows: the first additive is combusted at a high temperature of 900°C-1200°C, and a mixed gas is generated during the combustion, and a gas component other than the nitrogen-containing gas in the mixed gas is absorbed by a series of absorbents, and nitrogen oxides in the mixed gas are all reduced to molecular nitrogen, and then the nitrogen content is detected by a thermal conductivity detector, and then the acrylonitrile content is calculated, thereby detecting the weight proportion of the structural unit made from the monomer of formula I in the first additive.

The carboxyl group in the monomer of formula I makes the first additive of the present application weakly acidic, which may be used to neutralize the alkalinity in the strong alkaline slurry.

In some embodiments, a weight-average molecular weight of the first additive is 500-100,000, optionally, 2,000-50,000, and more optionally, 5,000-20,000.

The weight-average molecular weight of the first additive is selected to be 500-100,000, which is conducive to the synthesis of the first additive, and can further improve the direct current resistance (DCR) and cycle performance of the positive electrode sheet of the battery. In addition, a high molecule with an excessively long molecular chain causes an increase in the DCR of the electrode sheet, which in turn leads to degradation of cycle performance of the battery, and therefore it is advantageous that the weight-average molecular weight of the first additive is less than 100,000.

In the present application, a method for determining the weight-average molecular weight is as follows: the first additive is put into a centrifuge tube, which is placed into an ultracentrifuge, to observe sedimentation velocity of dispersed particles in a dispersion system, and the weight-average molecular weight of the first additive is determined by the principle of sedimentation velocity and molecular weight dependence.

In some embodiments, a weight proportion of the first additive in the positive electrode film is 0.01-2%, optionally, 0.02-1.5%, optionally, 0.05-1.2%, based on a total weight of the positive electrode film.

In the preparation of the slurry, by making the first additive having the foregoing weight proportion undergo a neutralization reaction with the alkaline substance in the slurry, slurry gelation can be mitigated or even prevented, so that a positive electrode sheet with good uniformity can be prepared. Thus a secondary battery prepared using the electrode sheet has good DCR performance and cycle performance.

If this proportion is less than 0.01%, a gelation phenomenon and stability problem of the positive electrode slurry cannot be improved; and if this proportion is greater than 2%, it results in that the secondary battery prepared by using the prepared positive electrode film has an increased DCR and degraded cycle performance.

In some embodiments, the positive electrode film includes a second additive that is a vinylidene fluoride modified polymer having a vinylidene fluoride main chain and a C₃-C₁₀ unsaturated carboxylic acid group grafted on the vinylidene fluoride main chain.

In the present application, the C₃-C₁₀ unsaturated carboxylic acid group may be all monobasic unsaturated carboxylic acid groups, dibasic unsaturated carboxylic acid groups or polybasic unsaturated carboxylic acid groups commonly used in the art, for example, it may be one or more carboxylic acid groups selected from acrylic acid, methacrylic acid and butenedioic acid.

In the present application, polyvinylidene fluoride is abbreviated as PVDF, and thus the second additive described in the present application may be referred to as "modified PVDF", which is a polymer having C₃-C₁₀ unsaturated carboxylic acid group grafted on the PVDF main chain.

According to the present application, grafting a C₃-C₁₀ unsaturated carboxylic acid on the vinylidene fluoride main chain can prevent or delay the gelation of the alkaline positive electrode slurry to some extent. However, in the case of only using the second additive (alkali-resistant PVDF), when it is used in a strong alkaline positive electrode slurry, a gelation phenomenon may still occur in the slurry and the viscosity rebounds greatly. In addition, in the case of only using the first additive, if the addition amount is large (for example, more than 1%), resistance of the positive electrode sheet increases, which in turn leads to degradation of the DCR performance and cycle performance of the battery. In the present application, the combination of the second additive and the first additive is used together with a strong alkaline positive active material, for example, a lithium-rich material and/or a high-nickel active material, whereby gelation of the strong alkaline positive electrode slurry during the preparation can be prevented. Therefore, the processability of the positive electrode slurry is improved, and the mass production of the positive electrode sheet is allowed, and the cycle performance and direct current resistance (DCR) of the resulting secondary battery can be further improved while increasing the energy density of the secondary battery.

The preparation of the second additive described in the present application may be carried out by conventional methods in the art.

In some optional embodiments, the C₃-C₁₀ unsaturated carboxylic acid group in the second additive may be selected from the carboxylic acid groups such as acrylic acid, methacrylic acid, butenedioic acid, and the like.

In addition, the second additive can effectively function as a binder to prevent the positive electrode film from falling off the positive electrode current collector.

In some embodiments, a weight proportion of the C₃-C₁₀ unsaturated carboxylic acid group in the second additive is optionally 0.1-1%, optionally, 0.5-1%.

Limiting the weight proportion of the C₃-C₁₀ unsaturated carboxylic acid group in the second additive to the foregoing range can further improve the processability, DCR, and cycle performance of the battery.

A method for determining the weight proportion of the C₃-C₁₀ unsaturated carboxylic acid group in the second additive is as follows: a nuclear magnetic resonance spectrogram of the material is measured by a nuclear magnetic resonance spectrogram spectrometer, and the position and intensity (area) of the peak of the nuclear magnetic resonance spectrogram spectrometer of the material is quantitatively analyzed, the quantity of -COOH in the second additive is qualitatively and quantitatively analyzed, and then the weight proportion of the C₃-C₁₀ unsaturated carboxylic acid group is deduced.

In some embodiments, a weight-average molecular weight of the second additive is in a range of 800,000-1500,000.

The weight-average molecular weight of the second additive is limited to the foregoing range, so that it may effectively function as a binder to prevent the positive electrode film from falling off the positive electrode current collector. In addition, the foregoing molecular weight range may also ensure good contact between the positive electrode film and the positive electrode current collector and can effectively reduce film resistance of the positive electrode sheet, thereby reducing the DCR of the secondary battery and improving the cycle performance of the secondary battery.

In some embodiments, a weight proportion of the second additive in the positive electrode film is less than or equal to 3.5%, optionally, less than or equal to 2.5%, based on a total weight of the positive electrode sheet.

If the weight proportion is greater than 3.5%, brittleness of the electrode sheet degrades and the battery DCR increases.

The species of the first additive or the second additive may be tested using equipment and methods known in the art. For example, a material can be tested using infrared spectroscopy to determine the characteristic peak it contains, so as to determine the species of the substance. For example, the test may be performed using an infrared spectrometer, such as NICOLET iS 10 Fourier Transform Infrared Spectrometer of the United States according to GB/T6040-2002 *General Rules for Infrared Analysis.* The contents and mass spectrums of the first additive or the second additive in the material may also be tested by a liquid chromatograph mass spectrometer, such as LC-MS 1000 Liquid Chromatograph Mass Spectrometer by SKYRAY INSTRUMENTS according to GB/Z35959-2018 *General Rules for Liquid Chromatography-Mass Spectrometry,* so as to determine the species of the substance and the amount of the substance used.

In the present application, the amount of the first additive and the second additive used may be less than the amount of the binder used.

If the conventional PVDF in the prior art rather than the second additive (modified PVDF) is used in the preparation of the positive electrode sheet of the secondary battery, the amount of the first additive needs to be greater than about 1% when the first additive is used, and only in this way, good processability can be obtained by using it together with the strong alkaline positive active material, otherwise (if less than about 1%), problems such as gelation and inconsistent coating weight will occur when the positive electrode slurry is processed. However, an amount of additive greater than about 1% may result in degradation of DCR performance and cycle performance of the battery.

Therefore, in the case of only using the first additive, the amount of the first additive may be optionally, 0.8-1.5 wt%, more optionally about 1.0 wt%, based on a total weight of the positive electrode film. When the amount of the first additive is less than or equal to 0.8 wt%, the gelation and stability problems of the slurry cannot be completely improved, and it results in that the resulting secondary battery has an increased DCR and degraded cycle performance. When the amount of the first additive is greater than or equal to 1.5 wt%, although the slurry gelation and stability of the strong alkaline slurry can be improved, it also causes an increase in the DCR of the battery and degradation in the cycle performance.

However, the inventor of the present application unexpectedly found that the combined use of the first additive and the second additive can reduce the amount of the first additive used (as compared to the combination of the first additive and conventional PVDF) , for example, good battery performance can still be achieved when the amount of the first additive is 0.1%, and can reduce the amount of the second additive used (as compared to the combination of the second additive and other additives); moreover, an improvement in the processability of the positive electrode slurry can be achieved while reducing the amount of the above additives used, thereby ensuring good cycle performance, DCR performance of the secondary battery prepared. Therefore, in some optional embodiments, in the positive electrode film, the weight proportion of the first additive is 0.05-1%, optionally, 0.05-0.5%, more optionally, 0.05-0.2%, and the weight proportion of the second additive is 0.5-3.5%, optionally, 0.7-3.0%, more optionally, 1.0-2.8%, based on the total weight of the positive electrode film.

In some embodiments, the positive electrode film includes a lithium-rich additive represented by formula II,

Formula II LiₓM_{y}Rₖ

where x>0, y≥0; k>0; x, y, k satisfy the following conditions: their values are such that the formula is electrically neutral;
M is selected from a transition metal, optionally, M is selected from one of Ni, Co, Fe,
R is selected from one of S, N, O, F;
optionally, the positive electrode film includes, but is not limited to, the lithium-rich additive selected from the following:

   LiNiO₂, Li₂NiO₂, LiCoO₄, Li₆CoO₄, Li₅FeO₄, Li₂S, Li₃N, Li₂O, Li₂O₂, and LiF.

Optionally, in formula II, x, y, and z may be integers, and all of them are less than 10.

During the first charge-discharge cycle of a lithium-ion battery, some active Li⁺ removed from the positive electrode participates in the formation of a SEI film on a surface of a negative electrode, and this part of Li⁺ cannot provide discharge capacity in the subsequent cycle, resulting in irreversible capacity loss. In some preferred embodiments of the present application, in order to compensate for the loss of this part of active Li⁺, a lithium-rich additive having formula II is selected to be added to the positive electrode sheet, which can effectively compensate for the loss of active Li⁺ due to the formation of the SEI film in the negative electrode of the battery, thereby increasing the reversible capacity of the battery and increasing mass energy density and volume energy density of the battery. In the case where the first additive and/or the second additive described in the present application are added, the energy density of the lithium-ion battery can be ensured to be improved by adding the lithium-rich additive, and processability of the slurry and the cycle performance of the lithium-ion battery can be ensured.

In some embodiments, a weight proportion of the lithium-rich additive in the positive electrode film is less than or equal to 15 wt%, optionally, less than or equal to 10 wt%.

In some optional embodiments, a weight proportion of the lithium-rich additive in the positive electrode film is greater than or equal to 1%, optionally, greater than or equal to 2%, and more optionally, about 3-7%.

The lithium-rich additive within the foregoing proportion range can effectively compensate for the loss of active Li⁺ due to the formation of the SEI film in the negative electrode of the battery, further improving the energy density of the battery. If the lithium-rich additive exceeds the foregoing range, there is a safety risk to the battery cell. The weight proportion of the lithium-rich additive in the positive electrode film is limited to the foregoing range.

In addition, if a lithium-rich additive is added to the battery, the amount of the first additive and the second additive added may be adjusted according to the amount of the lithium-rich additive added.

The type of the lithium-rich additive in the positive electrode sheet may be tested using equipment and methods known in the art, for example, an X-ray diffraction (XRD) method. With the help of XRD, the diffraction peak of the material may be tested to determine the characteristic peak it contains, so as to determine the species of substances. For example, the test may be performed using D2 PHASER XRD instrument by BRUKER according to JIS K0131-1996 *General Rules for X-Ray Diffractometric Analysis.*

In the present application, the positive electrode current collector has two surfaces opposite in its own thickness direction, and the positive electrode film layer is disposed on either or both of the two opposite surfaces of the positive electrode current collector.

In some embodiments, the positive electrode current collector may be metal foil or a composite current collector. For example, as the metal foil, aluminum foil may be used. The composite current collector may include a polymer material base layer and a metal layer formed on at least one surface of the polymer material base layer. The composite current collector may be formed by synthesizing a metal material (aluminum, aluminum alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), polyethylene (PE), or the like).

In some embodiments, the positive active material in the slurry may be a positive active material for a battery known in the art. As an example, the positive active material may include at least one of the following materials: a lithium containing phosphate of an olivine structure, a lithium transition metal oxide, and their respective modified compounds. However, the present application is not limited to these materials, and other conventional materials that can be used as a positive active material for a battery may also be used. One type of these positive active materials may be used alone, or two or more types thereof may be used in combination. Examples of the lithium transition metal oxide may include, but are not limited to, at least one of lithium cobalt oxides (such as LiCoO₂), lithium nickel oxides (such as LiNiO₂), lithium manganese oxides (such as LiMnO₂, LiMn₂O₄), lithium nickel cobalt oxides, lithium manganese cobalt oxides, lithium nickel manganese oxides, lithium nickel cobalt manganese oxides (such as LiNi_{1/3}Co_{1/3}Mn_{1/3}O₂ (NCM₃₃₃ for short), LiNi_{0.5}Co_{0.2}Mn_{0.3}O₂ (NCM₅₂₃ for short), LiNi_{0.5}CO_{0.25}Mn_{0.25}O₂ (NCM₂₁₁ for short), LiNi_{0.6}Co0_{.2}Mn_{0.2}O₂ (NCM₆₂₂ for short), LiNi_{0.8}Co_{0.1}Mn_{0.1}O₂ (NCM₈₁₁ for short)), lithium nickel cobalt aluminum oxides (such as LiNi_{0.85}Co_{0.15}Al_{0.05}O₂), their modified compounds, or the like. Examples of the lithium containing phosphate of the olivine structure may include, but are not limited to, at least one of lithium iron phosphate (such as LiFePO₄ (LFP for short)), composite materials of lithium iron phosphate and carbon, lithium manganese phosphate (such as LiMnPO₄), composite materials of lithium manganese phosphate and carbon, lithium manganese iron phosphate, and composite materials of lithium manganese iron phosphate and carbon.

In some embodiments, the positive electrode current collector may be metal foil or a composite current collector. For example, as the metal foil, aluminum foil may be used. The composite current collector may include a polymer material base layer and a metal layer formed on at least one surface of the polymer material base layer. The composite current collector may be formed by synthesizing a metal material (aluminum, aluminum alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), polyethylene (PE), or the like).

In some embodiments, the positive active material may be a positive active material for a battery known in the art. As an example, the positive active material may include at least one of the following materials: a lithium containing phosphate of an olivine structure, a lithium transition metal oxide, and their respective modified compounds. However, the present application is not limited to these materials, and other conventional materials that can be used as a positive active material for a battery may also be used. One type of these positive active materials may be used alone, or two or more types thereof may be used in combination. Examples of the lithium transition metal oxide may include, but are not limited to, at least one of lithium cobalt oxides (such as LiCoO₂), lithium nickel oxides (such as LiNiO₂), lithium manganese oxides (such as LiMnO₂, LiMn₂O₄), lithium nickel cobalt oxides, lithium manganese cobalt oxides, lithium nickel manganese oxides, lithium nickel cobalt manganese oxides (such as LiNi_{1/3}Co_{1/3}Mn_{1/3}O₂ (NCM₃₃₃ for short), LiNi_{0.5}Co_{0.2}Mn_{0.3}O₂ (NCM₅₂₃ for short), LiNi_{0.5}Co_{0.25}Mn_{0.25}O₂ (NCM₂₁₁ for short), LiNi_{0.6}Co0_{.2}Mn_{0.2}O₂ (NCM₆₂₂ for short), LiNi_{0.8}Co_{0.1}Mn_{0.1}O₂ (NCM₈₁₁ for short)), lithium nickel cobalt aluminum oxides (such as LiNi_{0.85}Co_{0.15}Al_{0.05}O₂), their modified compounds, or the like. Examples of the lithium containing phosphate of the olivine structure may include, but are not limited to, at least one of lithium iron phosphate (such as LiFePO₄ (LFP for short)), composite materials of lithium iron phosphate and carbon, lithium manganese phosphate (such as LiMnPO₄), composite materials of lithium manganese phosphate and carbon, lithium manganese iron phosphate, and composite materials of lithium manganese iron phosphate and carbon.

In some embodiments, the positive film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and fluorine-containing acrylate resin.

In some embodiments, the positive film layer further optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode sheet may be prepared in the following manner. The foregoing components for preparing the positive electrode sheet such as the positive active material, the conductive agent, the binder, and any other components are dispersed in a solvent (such as N-methylpyrrolidone), to form a positive electrode slurry, the positive electrode slurry is coated on the positive electrode current collector, and then after drying, cold pressing and other processes, a positive electrode sheet may be obtained.

### [Negative Electrode Sheet]

A negative electrode sheet includes a negative electrode current collector and a negative film layer provided on at least one surface of the negative electrode current collector, and the negative film layer includes a negative active material.

As an example, the negative electrode current collector has two surfaces opposite in its own thickness direction, and the negative film layer is disposed on either or both of the two opposite surfaces of the negative electrode current collector.

In some embodiments, the negative electrode current collector may be metal foil or a composite current collector. For example, as the metal foil, copper foil may be used. The composite current collector may include a polymer material base layer and a metal layer formed on at least one surface of the polymer material substrate. The composite current collector may be formed by synthesizing a metal material (copper, copper alloy, nickel, nickel alloy, titanium, titanium alloy, silver and silver alloy, or the like) on a polymer material substrate (such as a substrate of polypropylene (PP), polyethylene glycol terephthalate (PET), polybutylene terephthalate (PBT), polystyrene (PS), polyethylene (PE), or the like).

In some embodiments, the negative active material may be a negative active material for a battery known in the art. As an example, the negative active material may include at least one of artificial graphite, natural graphite, soft carbon, hard carbon, silicon-based materials, tin-based materials, lithium titanate, or the like. The silicon-based material may be selected from at least one of elemental silicon, silicon-oxygen compounds, silicon-carbon composites, silicon-nitrogen composites, and silicon alloys. The tin-based material may be selected from at least one of elemental tin, tin oxide compounds, and tin alloys. However, the present application is not limited to these materials, and other conventional materials that can be used as a negative active material for a battery may also be used. One type of these negative active materials may be used alone, or two or more types thereof may be used in combination.

In some embodiments, the negative film layer further optionally includes a binder. The binder may be selected from at least one of styrene-butadiene rubber (SBR), polyacrylic acid (PAA), polyacrylate sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative film layer further optionally includes other adjuvants, for example, thickening agents (such as sodium carboxymethyl cellulose (CMC-Na)), or the like.

In some embodiments, the negative electrode sheet may be prepared in the following manner. The foregoing components for preparing the negative electrode sheet such as the negative active material, the conductive agent, the binder, and any other components are dispersed in a solvent (such as deionized water), to form a negative electrode slurry, the negative electrode slurry is coated on the negative electrode current collector, and then after drying, cold pressing and other processes, a negative electrode sheet may be obtained.

### [Electrolyte]

The electrolyte plays the role of conducting ions between the positive electrode sheet and the negative electrode sheet. The type of the electrolyte is not specifically limited in the present application, and may be selected according to needs. For example, the electrolyte may be liquid, gel, or all solid.

In some embodiments, the electrolyte is liquid, and includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalateborate, lithium bisoxalateborate, lithium difluorobisoxalate phosphate, and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and diethyl sulfone.

In some embodiments, the electrolytic solution further optionally includes an additive. For example, the additive may include a negative electrode film-forming additive, a positive electrode film-forming additive, and an additive capable of improving specific performance of the battery, for example, an additive for improving overcharge performance of the battery, or an additive for improving high-temperature or low-temperature performance of the battery, or the like.

### [Separator]

In some embodiments, a separator is further included in the secondary battery. The type of the separator is not particularly limited in the present application, and any well-known porous structure separator with good chemical stability and mechanical stability may be selected.

In some embodiments, the material of the separator may be selected from at least one of glass fiber, non-woven fabric, polyethylene, polypropylene, and polyvinylidene difluoride. The separator may be a single-layer film or a multi-layer composite film, which is not particularly limited. When the separator is a multi-layer composite film, the materials of each layer may be the same or different, which is not particularly limited.

In some embodiments, the positive electrode sheet, the negative electrode sheet, and the separator may be subject to a winding process or a lamination process, to obtain an electrode assembly.

In some embodiments, the secondary battery may include an outer package. The outer package may be used to package the foregoing electrode assembly and electrolyte.

In some embodiments, the outer package of the secondary battery may be a hard shell such as a hard plastic shell, an aluminum shell, or a steel shell. In some embodiments, the outer package of the battery cell may be a soft package, such as a bag-type soft package. A material of the soft package may be plastic, for example, polypropylene, polybutylene terephthalate, and polybutylene succinate.

### Method for Preparing Secondary Battery

In one embodiment, the present application provides a method for preparing a secondary battery, where the positive electrode sheet described in the first aspect of the present application is used.

The preparation of the secondary battery may further include the step of assembling the negative electrode sheet, the positive electrode sheet, and the electrolyte of the present application to form a secondary battery. In some embodiments, the positive electrode sheet, the separator, and the negative electrode sheet may be wound or stacked in sequence, so that the separator is placed between the positive electrode sheet and the negative electrode sheet to play the role of isolation, to obtain a battery cell. The battery cell is placed in an outer package, the electrolyte is injected, and encapsulation is performed to obtain a secondary battery.

In some embodiments, the preparation of the secondary battery may further include the step of preparing a positive electrode sheet. As an example, the positive active substance, the conductive agent, and binder may be dispersed in a solvent (such as N-methylpyrrolidone, NMP for short), to form a uniform positive electrode slurry, the positive electrode slurry is coated on the positive electrode current collector, and after drying, cold pressing and other processes, a positive electrode sheet is obtained.

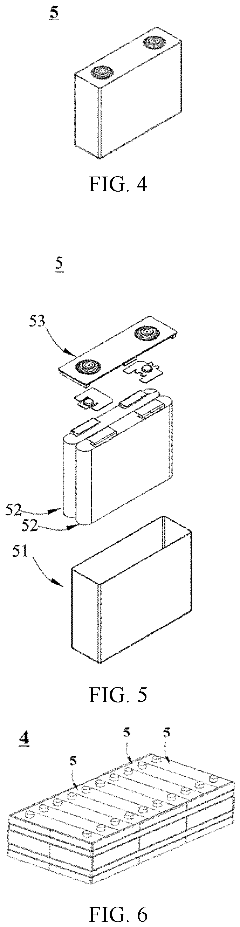

The present application has no particular limitation on the shape of the secondary battery, which may be a cylinder, a square, or any other shape. For example, FIG. 4 shows a secondary battery 5 of a square structure as an example.

In some embodiments, referring to FIG. 5, the outer package may include a housing 51 and a cover plate 53. The housing 51 may include a bottom plate and a side plate connected to the bottom plate. The bottom plate and the side plate are enclosed to form an accommodating cavity. The housing 51 has an opening communicating with the accommodating cavity, and the cover plate 53 can cover the opening to close the accommodating cavity. A positive electrode sheet, a negative electrode sheet, and a separator may be subject to a winding process or a lamination process to form an electrode assembly 52. The electrode assembly 52 is packaged in the accommodating cavity. The electrolytic solution is infiltrated in the electrode assembly 52. The number of electrode assemblies 52 included in the secondary battery 5 may be one or more, and the specific number may be selected by persons skilled in the art according to specific actual needs.

In some embodiments, secondary batteries may be assembled into a battery module, and the number of secondary batteries included in the battery module may include one or more, and the specific number may be selected by persons skilled in the art according to application and capacity of the battery module.

FIG. 6 shows a battery module 4 as an example. Referring to FIG. 6, in the battery module 4, a plurality of secondary batteries 5 may be sequentially arranged along a length direction of the battery module 4. Certainly, they may be arranged in accordance with any other manner. Further, the plurality of secondary batteries 5 may be fixed by using fasteners.

Optionally, the battery module 4 may further include a shell with an accommodating space, and the plurality of secondary batteries 5 are accommodated in the accommodating space.

In some embodiments, battery modules may be further assembled into a battery pack, and the number of battery modules included in the battery pack may be one or more, and the specific number may be selected by persons skilled in the art according to application and capacity of the battery pack.

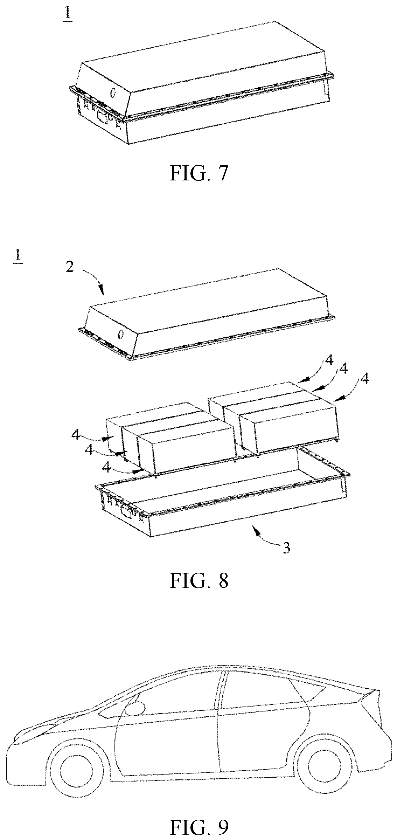

FIG. 7 and FIG. 8 show a battery pack 1 as an example. Referring to FIG. 7 and FIG. 8, the battery pack 1 may include a battery box and a plurality of battery modules 4 disposed in the battery box. The battery box includes an upper box 2 and a lower box 3. The upper box 2 can cover the lower box 3 and form an enclosed space for accommodating the battery modules 4. The plurality of battery modules 4 may be arranged in the battery box in any manner.

In addition, the present application also provides a power consumption apparatus including at least one of a secondary battery, a battery module, or a battery pack provided in the present application. The secondary battery, battery module, or battery pack may be used as a power source for the power consumption apparatus as well as an energy storage unit for the power consumption apparatus. The power consumption apparatus may include a mobile device (for example, a mobile phone, a notebook computer), an electric vehicle (for example, a pure electric vehicle, a hybrid electric vehicle, a plug-in hybrid electric vehicle, an electric bicycle, an electric scooter, an electric golf cart, an electric truck), an electric train, a ship and a satellite, an energy storage system, or the like, but is not limited to this.

As the power consumption apparatus, a secondary battery, a battery module, or a battery pack may be selected according to usage requirements.

FIG. 9 shows a power consumption apparatus as an example. The power consumption apparatus is a pure electric vehicle, a hybrid electric vehicle, a plug-in hybrid electric vehicle, or the like. To meet a requirement of the power consumption apparatus for high power and high energy density of a secondary battery, a battery pack or a battery module may be used.

The present application is illustrated in detail below by way of examples, which are non-limitative.

### [EXAMPLES]

Hereinafter, examples of the present application will be described. The examples described below are illustrative, only used to explain the present application, and should not be construed as a limitation to the present application. Where specific techniques or conditions are not specified in the examples, they are performed according to techniques or conditions described in the literature in the art or according to product specifications. The reagents or instruments used without specifying the manufacturer are conventional products that can be obtained from the market.

### Example 15

### Step 1: Preparation of First Additive

30 g of acrylonitrile and 70 g of a monomer of formula I acrylic acid were put in a stirring tank, and stirred at a rotation speed of 800 r/min and at a temperature of 35°C for 2 h, so that the two monomers were uniformly dispersed. Then an initiator azobisisobutyronitrile (AIBN) was added, and the reaction system was placed in a water bath at 60°C, left standing for 48 h, taken out, and then placed in a vacuum drying oven, and vacuum-dried at a temperature of 60°C for 24 h, to obtain a first additive.

### Step 2: Preparation of Second Additive (Modified PVDF)

PVDF powder was dissolved in a solution N,N-dimethylformamide, heated in a nitrogen atmosphere, 1 wt% (based on the weight of PVDF powder) of acrylic acid was added, continually heated in a water bath, and the temperature of water bath was controlled to be between 60-80°C, 0.1 wt% (based on the weight of PVDF powder) of benzoyl peroxide (an initiator BPO) was added after 0.5 h, and the reaction was carried out for 8 h. After the reaction was completed, it was cooled at room temperature. After cooling, the reactants were put into anhydrous ethanol for precipitation and filtration to remove unsaturated carboxylic acid organic compounds and impurities, and then vacuum-dried for 24 h, to obtain a binder modified polyvinylidene fluoride, that is, a second additive.

### Step 3: Preparation of Positive Electrode Sheet

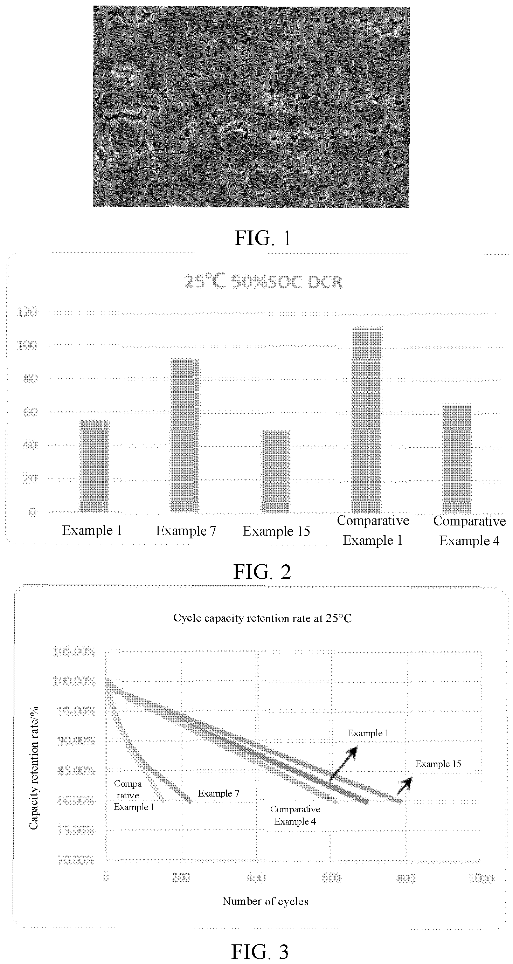

A positive active material LiNi_{0.5}Co_{0.2}Mn_{0.3}O₂ (commercially available, available from Zhenhua E-chem Inc.), Li₂O₂ (commercially available), the second additive modified PVDF prepared in step 2, a conductive agent carbon black SP, and the first additive prepared in step 1 were dissolved in a solvent N-methylpyrrolidone (NMP) in a weight ratio of 91.9:3.0:2.0:3.0:0.1, fully stirred and uniformly mixed, to obtain a positive electrode slurry. The positive electrode slurry was uniformly coated on aluminum foil of the positive electrode current collector, and then drying, cold pressing, and cutting were performed to obtain a positive electrode sheet. A scanning electron microscope image of the positive electrode sheet is shown in FIG. 1.

### Step 4: Preparation of Negative Electrode Sheet

A negative active material artificial graphite, a conductive agent acetylene black, a binder styrene butadiene rubber (SBR), a thickening agent sodium carboxymethyl cellulose (CMC-Na) were dissolved in deionized water in a weight ratio of 96:1.0:1.5:1.5, fully stirred and uniformly mixed, to obtain a negative electrode slurry. The negative electrode slurry was coated on copper foil of the negative electrode current collector, and then drying, cold pressing, and cutting were performed to obtain a negative electrode sheet.

### Step 5: Preparation of Electrolytic Solution

Ethylene carbonate (EC), ethyl methyl carbonate (EMC) and diethyl carbonate (DEC) were mixed in a volume ratio of 1:1:1, and then lithium hexafluorophosphate (LiPF₆) was uniformly dissolved in the above solution to obtain an electrolytic solution. In this electrolytic solution, the concentration of LiPF₆ was 1 mol/L.

### Step 6: Separator

A polypropylene film was used.

### Step 7: Preparation of Secondary Battery

The foregoing positive electrode sheet, separator, and negative electrode sheet were stacked and wound to obtain an electrode assembly; the electrode assembly was placed into an outer package, the above electrolytic solution prepared was added, and packaging, standing, chemical conversion, aging, and the like were performed to obtain a secondary battery.

### Examples 1-14 and 16-21 and Comparative Examples 1-4

Examples 1-14 and 16-21 and Comparative Examples 1-4 were prepared similar to Example 1, except that the parameters in Table 1 below were used.

### Determination of Molecular Weight

A weight-average molecular weight in each Example and the Comparative Example was determined by the following method: a material to be tested was put into a centrifuge tube, and which was placed into an ultracentrifuge, to observe sedimentation velocity of dispersed particles in a dispersion system, and a weight-average molecular weight of the material was determined by the principle of sedimentation velocity and molecular weight dependence.

### Performance Test

A performance test is carried out on the positive electrode sheet and the secondary battery prepared in each Example and Comparative Example, and the specific test method is as follows:
1. **Brittleness Test of Positive Electrode Sheet**

The positive electrode sheet prepared in each Example and Comparative Example were taken, and a small positive electrode sheet sample with a width of 2.5 cm and a length of 20 cm was taken in a coating direction of the electrode sheet, with 5 samples for each Example and Comparative Example. The sample was pre-folded in half in the transverse direction. The pre-folded experimental electrode sheet was placed on the flat surface of the experimental bench, rolled once with a 2 kg cylindrical roller, and the light transmission case was observed. If the light was transmitted, the number of times of folding in half was recorded as 1. If the light was not transmitted, folding was continued, and the experimental sample was folded along the crease, and the crease was observed against the light. If the light was transmitted or the crease was broken, the number of times of folding in half was recorded as 2; and if the light was not transmitted, folding was continued, and the actual number of times of light transmission was recorded.

### 2. DCR Test of Secondary Battery at 25°C

At 25°C, the battery was charged at a constant current rate of 0.5C until a voltage was 4.25 V, and then was charged at a constant voltage until a current was 0.05C; discharging was performed on the battery at a constant current rate of 0.5C for 30 minutes, to adjust the battery to 50% SOC, at which time the voltage of the battery was recorded as U1; and discharging was performed on the battery at a constant current rate of 4C for 30 seconds with a result being collected every 0.1 seconds, and the voltage at the end of the discharge was recorded as U2. The initial DCR of the battery was represented by the discharge DCR at 50% SOC of the battery, and the initial DCR of the battery = (U1-U2)/4C.

### 3. Cycle Performance Test of Secondary Battery at 25°C

At 25°C, the secondary battery prepared in each Example and Comparative Example was charged at a constant current rate of 1C until a charge cutoff voltage was 4.25, and then was charged at a constant voltage until a current was equal to or less than 0.05C, and was left standing for 5 min; and discharging was performed at a constant current rate of 0.33 C until a discharge cutoff voltage was 2.8, and was left standing for 5 min, which was the first charge-discharge cycle. According to this method, a cyclic charge/discharge test was performed on the battery, until the battery capacity decayed to 80%. The number of cycles at this time was the cycle life of the battery at 25°C.

FIG. 2 and FIG. 3 show analysis diagrams of DCR data and cycle performance data of Example 1, Example 7, Example 15, and Comparative Example 1, and Comparative Example 4, from which the DCR performance and cycle performance of these Examples and Comparative Examples can be seen intuitively.

The test results of the electrode sheet performance and battery performance of each Example and Comparative Example are shown in Table 1 below. In Table 1, the weight proportion of the first additive in the positive electrode film and the weight proportion of the second additive in the positive electrode film respectively correspond to a proportion of their added weight of respective additives.

In addition, in Table 1 below, in all the Examples, the proportion of acrylonitrile in the first additive was 30%, and the proportion of monomer I was 70%; and in Examples and Comparative Examples, the type of the second additive was the same as that in Example 15.

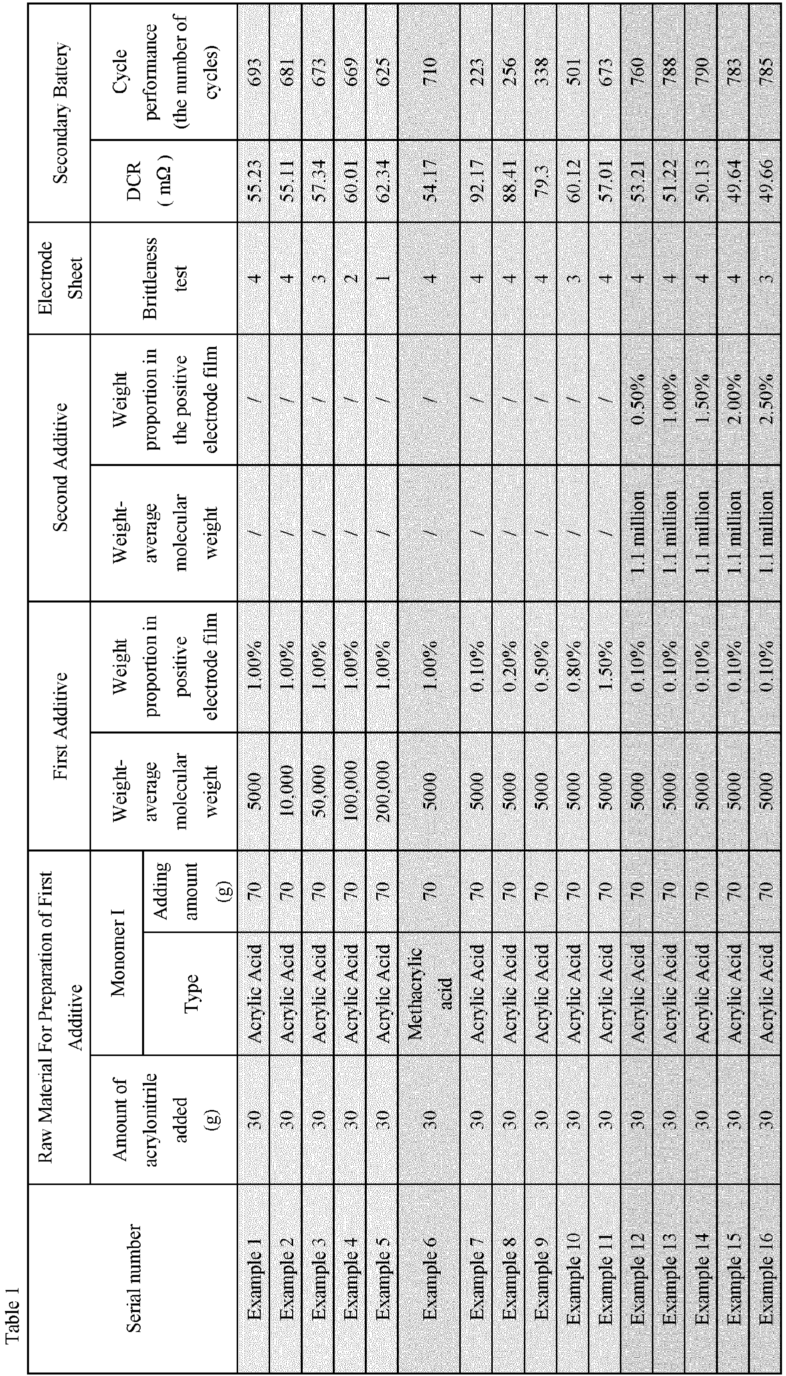

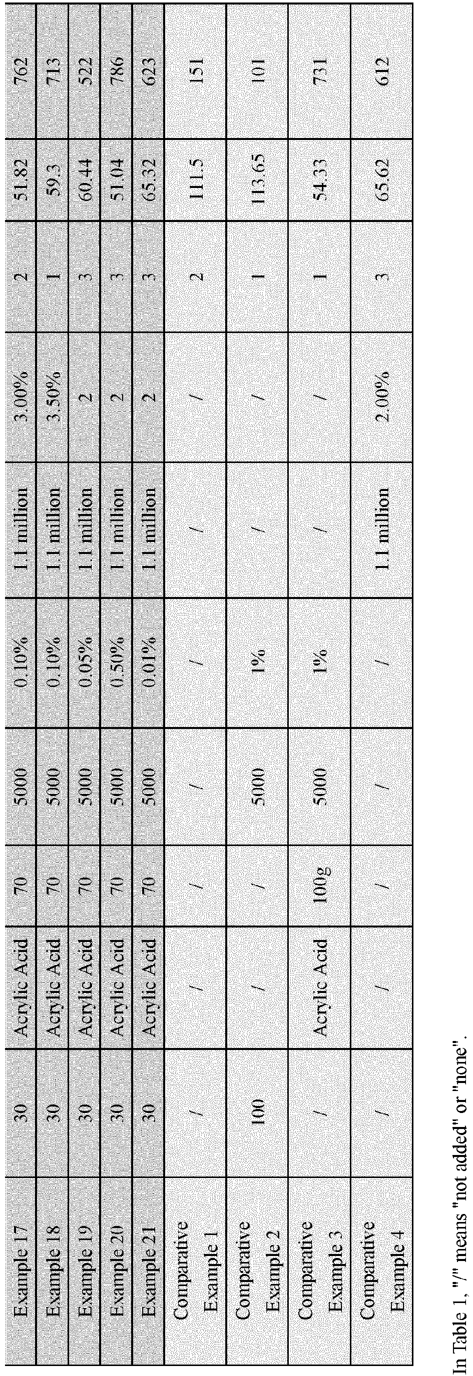

In Examples 1-5, only parameters of the weight-average molecular weight of the first additive were changed. The results showed that when the weight-average molecular weight of the first additive was in the range of 5,000-200,000, a secondary battery having good DCR performance and cycle performance can be obtained. However, when the weight-average molecular weight is 200,000, brittleness of the positive electrode sheet prepared was poor. It can be seen from Table 1 that better brittleness of the electrode sheet can be obtained when the weight-average molecular weight is less than 100,000, or even less than 50,000.

In Example 6, the first additive was prepared by using other types of monomer I, which still achieved good electrode sheet brittleness, battery DCR performance and cycle performance.

In Examples 7-11, the addition amount of the first additive was changing. It can be seen that the greater the addition amount, especially when the addition amount is ≥0.8%, the better the electrode sheet brittleness, the battery DCR and the cycle performance.

In Examples 12-21, the second additive described in the present application was used. It can be seen that when only 0.1% of the first additive was used, good DCR performance and cycle performance of the secondary battery can be achieved by using 0.5-3.5% of the second additive. However, when the amount of the second additive was more than 2.5%, especially more than 3.0%, particularly, 3.5%, the brittleness of the electrode sheet became very poor. Therefore, it is considered advantageous to control the amount of the second additive below 3.5%, especially, below 3.0%.

In Comparative Example 1, neither the first additive of the present application nor the second additive of the present application was added. As a result, the electrode sheet prepared was relatively brittle, and the DCR performance and battery performance of the battery were poor.

In Comparative Example 2, only acrylonitrile was used as the first additive. As a result, the electrode sheet prepared was relatively brittle, and the DCR performance and battery performance of the battery were relatively poor.

In Comparative Example 3, only acrylic acid was used as the first additive, although good DCR performance and battery cycle performance were achieved, the electrode sheet was brittle, which was not conducive to the long-term use and safety performance of the battery.

In Comparative Example 4, only the second additive was used and the first additive was not used. It can be seen from the result that although the battery cycle performance was good, the DCR performance was slightly inferior and the electrode sheet was brittle.

It should be noted that the present application is not limited to the foregoing embodiments. The foregoing embodiments are merely examples, and embodiments having substantially the same constitution as the technical idea and exerting the same effects within the technical solution of the present application are all included within the technical scope of the present application. In addition, various modifications may be made to the embodiments by persons skilled in the art without departing from the spirit and scope of the present application, and other embodiments that are constructed by combining some of the constituent elements of the embodiments are also included in the scope of the present application.

## Claims

1. A positive electrode sheet, comprising:
a positive electrode current collector; and
a positive electrode film, the positive electrode film disposed on at least one surface of the positive electrode current collector and comprising a first additive, wherein the first additive comprises a structural unit made from acrylonitrile and a structural unit made from a monomer represented by formula I, 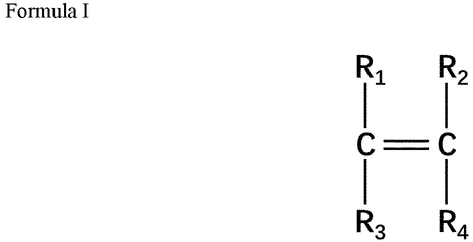
wherein R₁, R₂, R₃, and R₄ are each independently selected from hydrogen, an alkyl group with 1-8 carbon atoms or a saturated carboxylic acid group with 1-8 carbon atoms, and at least one of R₁, R₂, R₃, R₄ is selected from the saturated carboxylic acid group with 1-8 carbon atoms.

2. The positive electrode sheet according to claim 1, wherein in the monomer of formula I, a total number of carbon atoms is 3-10.

3. The positive electrode sheet according to claim 1 or 2, wherein a weight proportion of the structural unit made from the monomer represented by the formula I in the first additive is 60-85%, optionally, 65-75%.

4. The positive electrode sheet according to any one of claims 1 to 3, wherein a weight-average molecular weight of the first additive is 500-100,000, optionally, 2,000-50,000, and more optionally, 5,000-20,000.

5. The positive electrode sheet according to any one of claims 1 to 4, wherein a weight proportion of the first additive in the positive electrode film is 0.01-2%, optionally, 0.02-1.5%, optionally, 0.05-1.2%, based on a total weight of the positive electrode film.

6. The positive electrode sheet according to any one of claims 1 to 5, wherein the positive electrode film comprises a second additive that is a vinylidene fluoride modified polymer having a vinylidene fluoride main chain and a C₃-C₁₀ unsaturated carboxylic acid group grafted on the vinylidene fluoride main chain.

7. The positive electrode sheet according to any of claim 6, wherein a weight proportion of the C₃-C₁₀ unsaturated carboxylic acid group in the second additive is less than or equal to 1%, optionally, 0.5-1%.

8. The positive electrode sheet according to any one of claims 6 to 7, wherein a weight-average molecular weight of the second additive is in a range of 800,000-1500,000.

9. The positive electrode sheet according to any one of claims 1 to 8, wherein a weight proportion of the second additive in the positive electrode film is less than or equal to 3.5%, optionally, less than or equal to 2.5%, based on a total weight of the positive electrode sheet.

10. The positive electrode sheet according to any one of claims 1 to 9, wherein the positive electrode film comprises a lithium-rich additive represented by formula II,
Formula II LiₓM_{y}Rₖ
wherein x>0, y≥0; k>0; x, y, k satisfy the following conditions: their values are such that the formula is electrically neutral;
M is selected from a transition metal, optionally, M is selected from one of Ni, Co, Fe,
R is selected from one of S, N, O, F;
optionally, the positive electrode film comprises the lithium-rich additive selected from the following:
LiNiO₂, Li₂NiO₂, LiCoO₄, Li₆CoO₄, Li₅FeO₄, Li₂S, Li₃N, Li₂O, Li₂O₂, and LiF.

11. The positive electrode sheet according to claim 10, wherein a weight proportion of the lithium-rich additive in the positive electrode film is less than or equal to 15 wt%, optionally, less than or equal to 10 wt%.

12. A secondary battery comprising the positive electrode sheet according to any one of claims 1 to 11.

13. A power consumption apparatus comprising the secondary battery selected from claim 12.

14. A battery pack comprising the battery module according to claim 13.

15. A power consumption apparatus, comprising at least one selected from the second battery according to claim 12, the battery module according to claim 13 or the battery pack according to claim 14.
